# EUROPEAN PATENT SPECIFICATION

(11) **EP 2 957 455 B1**
(45) Date of publication and mention of the grant of the patent: **14.08.2019**
(21) Application number: 14382227.8
(22) Date of filing: 16.06.2014
(51) Int. Cl.: B60N 2/28

(54) **Lateral adapter and adapter kit for vehicle seat anchorings**
Seitlicher Adapter und Adapterkit für Fahrzeugsitzverankerungen
Adaptateur latéral et kit adaptateur pour ancrages de siège de véhicule

(43) Date of publication of application: 23.12.2015
(73) Proprietor: Lagunar Herranz, Jose, 47015 Valladolid (ES)
(72) Inventor: Lagunar Herranz, Jose, 47015 Valladolid (ES)
(74) Representative: Pons

(56) References cited:
- WO-A1-2008/129327
- DE-A1- 10 047 790

## Description

### TECHNICAL FIELD OF THE INVENTION

The present invention belongs to the field of anchorings for vehicle seats. Said invention relates to a lateral adapter for vehicle seat anchorings. These anchorings consist in two Isofix type rings, and the adapter comprises a first bar with a length corresponding to at least the separation between two consecutive rings, and some first attachment means for the first bar to the rings; and an adapter kit comprising two side adapters connected by a central adapter, allowing the transverse adaptation of a supplemental seat and the anchorings in order to optimise space use in the rear seats of a vehicle.

### BACKGROUND OF THE INVENTION

There currently exist ring-shaped anchorings for rear seats of vehicles used to attach supplemental seats such as child seats, known as the Isofix system and regulated by Standards R44/04 and i-Size (Standard R129). These anchorings are attached to the structure of the vehicle seat, such that their position is fixed.

The fixed position of these anchorings means that it is not possible to adjust the position of the seat sideways, which depending on the vehicle make and model and that of the additional seat to anchor often results in substantial space being wasted in the rear seats. By way of example, it is known that the supplemental seat can be placed up to 7 cm from the vehicle door, thereby taking up considerable space such that an adult can hardly fit next to the supplemental seat, and making it impossible for a third person to fit in or to install abreast three supplemental seats.

Some patents are known, such as DE102011008624, DE10047790 and EP1151893, wherein the supplemental seat frame can move laterally with respect to the Isofix anchorings. This solves the problem, as it allows compensating the space lost with the position of the anchorings. However, this solution requires using specific seats which, due to the aforementioned regulation, have a complex mechanism, and are difficult to find and more expensive than conventional seats.

Also known is patent EP1851 084 wherein the anchorings are specific, not standardised, consisting in a continuous slot along the entire width of the rear seats to which the supplemental seats can be anchored at any lateral position. This is a specific solution that implies a specific seat structure and specific supplemental seats, valid only for the brand and model of the vehicle implementing it.

Document WO2008/129327 relates to a support structure for securing a child seat in position within a vehicle, the support structure comprising: a frame for removable installation within the vehicle; one or more releasable connectors for attaching said frame to one or more standard anchorage points provided to the vehicle; and seat attachment means for coupling a child seat to the frame, the seat element means being movable relative to said frame for changing the child seat's location within the vehicle. The document also discloses a modular support structure for a child seat, comprising: one or more support limb modules, having one or more releasable connectors for attaching to one or more standard anchorage points provided to the vehicle; and one or more cross members supporting one or more seat attachment means for coupling to a child seat, the seat attachment means being movable on said one or more cross members.

One preferred embodiment of WO2008/129327, see figure 1 thereof, further describes that the support structure comprises cross bars (18), elongate bars (20), braces (22, 24) and cross bars (40, 42).

In short, the known solutions allowing lateral adaptation of a supplemental seat in the rear seats of a vehicle require a specific supplemental seat with a specific frame allowing transverse displacement with respect to the anchorings, or some anchorings and supplemental seats different from the standard Isofix system allowing any position between them, such that all the solutions known are complex and expensive.

Consequently, there is a need to use the Isofix anchorings and the existing supplemental seats and allow the transverse adaptation between those to optimize the space in the rear seats of a vehicle.

The present invention relates to an adapter for Isofix anchorings that covers the above-described need and solves the cited drawbacks in the prior art.

### DESCRIPTION OF THE INVENTION

The present invention is established and characterised by its independent claims, while its dependent claims describe additional features thereof.

The subject matter of the present invention relates to a lateral adapter and adapter kit for Isofix anchorings of vehicle seats, allowing a transverse adaptation between a supplemental seat and the anchorings in order to optimise space in the rear seats of a vehicle using the available anchorings and seats without requiring modification of either one, in any of the rear seats, including the centre seat, and in one or all of the rear seats, including the centre seat. The technical problem to solve is the configuration of a lateral adapter that can allow anchoring to the rear outer seats, and an adapter kit that allows anchoring to any of the rear seats, including the option of three seats in abreast configuration.

In view of the foregoing, the present invention relates to a lateral adapter for car seat anchorings, where said anchorings are two Isofix type rings. The rings are attached to the seat structure and are Isofix type rings, complying with standards R44/04 and i-Size. The adapter acts as an extension of the rings, such that it also complies with standards R44/04 and i-Size.

The lateral adapter is characterised in that it comprises a first bar, normally straight although it may be curved or combine straight and slightly curved segments, with a length of at least the separation between two consecutive rings, and some first attachment means of the first bar to the rings, including a first attachment means for each ring. In this way, the adapter is akin to converting the two rings placed in specific locations into a continuous ring, such that a supplemental seat can be placed at any transverse position on the bar, optimizing the space in the rear seats of the vehicle by simply anchoring the supplemental seat next to the side of the vehicle, abutting the door trim.

The invention also relates to an adapter kit for vehicle seat anchorings, said anchoring consisting in four Isofix rings to allow anchoring the supplemental seat on the central rear seat, in addition to the side seats if required.

The adapter kit is characterised in that it comprises two of the aforementioned lateral adapters separated from each other and connected by a central adapter, the latter comprising a second bar joined to two second attachment means of the second bar to the first bar, such that each second attachment means is attached to each of the first bars of the side adapters. In other words, the central adapter is similar to the lateral adapter; while the latter is attached to the rings, the former central adapter is attached to the bars of the lateral adapters, thereby defining a complete adapter set for the entire width of the rear seat of the vehicle, achieving a continuous anchoring that allows attaching the supplemental seats as desired. The rings and the lateral adapters comply with standards R44/04 and i-Size, such that the adapter set also complies with them.

One option is that both the first and the second attachment means are clips, analogous to those on the supplemental seats, although they can have a different configuration or be of a different type.

The most common option is that the first and/or the second bar have a circular cross-section, although it may be polygonal, such as to prevent rotation of the corresponding attachment, of the anchoring of the supplemental seat on the bar or of the second bar on the first bars.

To increase the versatility of the adapter, the un ion between the first bar and the first attachment means and/or between the second bar and the second attachment means can be fixed or fixable by a union, such as screwing, clamping, etc., or allow the relative motion between the same, for example by sliding bushings that can be blocked in one position, such as by stop nuts or other means.

Another alternative is that the second bar comprises a length adjuster that allows adjusting the length of the bar by moving together or apart two segments of said bar placed on either side of the length adjuster, thereby allowing adaptation to any vehicle configuration regardless of the width of the rear seat as well as allowing it to be transferred from one vehicle to another by simply adapting the width with the regulator.

### BRIEF DESCRIPTION OF THE FIGURES

The present specification is accompanied by a set of figures that illustrate an example of a preferred embodiment and in no way limit the invention.
Figure 1 shows a perspective view of a lateral adapter.
Figure 2 shows a perspective view of a detail of one of the attachment means of a lateral adapter.
Figure 3 shows a perspective view of an adapter kit.

### DETAILED DESCRIPTION OF THE PREFERRED EMBODIMENT OF THE INVENTION

A description is given below of an embodiment of the invention with reference to the figures.

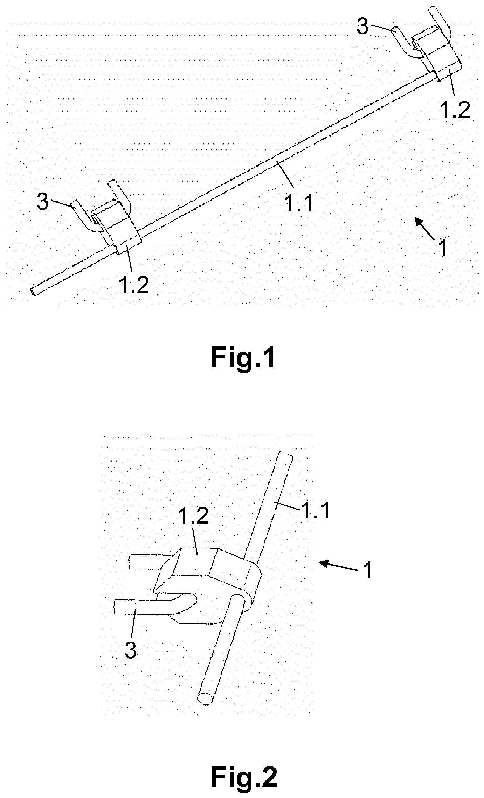

Figure 1 shows a lateral adapter (1) for vehicle seat anchorings, said anchorings being two Isofix type rings (3), which comprises a first bar (1.1) with a length of at least the separation between two consecutive rings (3), and some first attachment means (1.2), shown in detail in figure 2, providing a first attachment means (1.2) for each ring (3).

In the embodiment shown an option represented is that in which the first attachment means (1.2) are clips, the cross-section of the first bar (1.1) is circular, and the un ion between the first bar (1.1) and the first attachment means (1.2) is fixed, although optionally it can allow a relative motion with respect to each other.

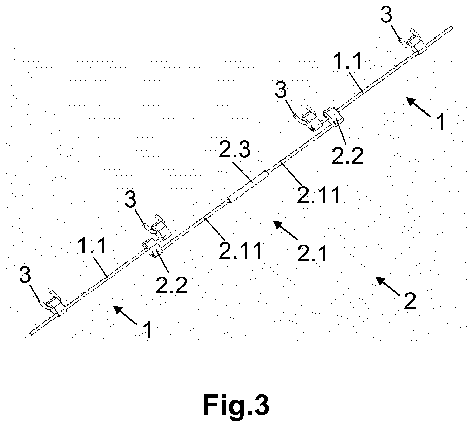

Figure 3 shows an adapter kit for vehicle seat anchorings, wherein said anchorings are four Isofix type rings (3), comprising two lateral adapters (1) as cited, separated from each other and connected to each other by a central adapter (2) that comprises a second bar (2.1) joined to two second attachment means (2.2) of the second bar (2) to the first bar (1), such that each second attachment means (2.2) is attached to one of the first bars (1.1) of the lateral adapters (1).

In the embodiment shown, the option is represented wherein the first (1.2) and second (2.2) attachment means are clips and the first (1.1) and second (2.1) bars have circular cross sections; in addition, the un ion between the second bar (2.1) and the second attachment means (2.2) is fixed, although it can optionally allow a relative motion with respect to each other.

Also shown is the option in which the second bar (2.1) comprises a length adjuster (2.3) such that it allows adjusting the length of the bar (2.1) by moving together or apart two segments (2.11) of said bar placed on either side of the length adjuster (2.3).

## Claims

1. Lateral adapter (1) for vehicle seat anchorings, wherein said anchorings are two Isofix type rings (3), **characterized in that** it comprises a first bar (1.1) with a length corresponding to at least the separation between two consecutive rings (3), and some first attachment means (1.2) for attaching the first bar (1.1) to the rings (3), there being one first attachment means (1.2) for each ring (3), so as to allow a vehicle seat to be placed at any transverse position on the first bar (1.1).

2. Lateral adapter (1) according to claim 1, wherein said first attachment means (1.2) are clips.

3. Lateral adapter (1) according to any of the preceding claims wherein the first bar (1.1) has a circular cross section.

4. Lateral adapter (1) according to any of the preceding claims wherein the first bar (1.1) and the first attachment means (1.2) are attached to each other by means of a union allowing a relative motion with respect to each other.

5. Adapter kit for vehicle seat anchorings, wherein said anchorings are four Isofix type rings (3), **characterized in that** it comprises two lateral adapters (1) according to any of the preceding claims, separated from each other and connected by a central adapter (2) that comprises a second bar (2.1) joined to two second attachment means (2.2) of the second bar (2) to the first bars (1), such that each second attachment means (2.2) is attached to each one of the first bars (1.1) of the lateral adapters (1).

6. Adapter kit according to claim 5 wherein the second attachment means (2.2) are clips.

7. Adapter kit according to any of claims 5 or 6 wherein the second bar (2.1) has a circular cross section.

8. Adapter kit according to any of claims 5 to 7 wherein the second bar (2.1) and the second attachment means (2.2) are attached to each other by means of a union which is fixed or allows a relative motion between the second bar (2.1) and the second attachment means (2.2).

9. Adapter kit according to any of claims 5 to 8 wherein the second bar (2.1) comprises a length adjuster (2.3) such that it allows adjusting the length of the bar (2.1) by moving together or apart two segments (2.11) of said bar placed on either side of the length adjuster (2.3).

## Patentansprüche

1. Seitlicher Adapter (1) für Fahrzeugsitzverankerungen, wobei die Verankerungen zwei isofixartige Ringe (3) sind, **dadurch gekennzeichnet, dass** er eine erste Stange (1.1) mit einer Länge umfasst, die mindestens der Trennung zwischen zwei aufeinander folgenden Ringen (3) entspricht, und einige erste Befestigungsmittel (1.2) zum Befestigen der ersten Stange (1.1) an den Ringen (3), wobei ein erstes Befestigungsmittel (1.2) für jeden Ring (3) vorliegt, um einem Fahrzeugsitz zu ermöglichen, an jeder Querposition an der ersten Stange (1.1) angeordnet zu werden.

2. Seitlicher Adapter (1) nach Anspruch 1, wobei die ersten Befestigungsmittel (1.2) Klammern sind.

3. Seitlicher Adapter (1) nach einem der vorhergehenden Ansprüche, wobei die erste Stange (1.1) einen kreisförmigen Querschnitt aufweist.

4. Seitlicher Adapter (1) nach einem der vorhergehenden Ansprüche, wobei die erste Stange (1.1) und das erste Befestigungsmittel (1.2) mittels eines Verbindungsstücks aneinander befestigt sind, das eine relative Bewegung in Bezug aufeinander zulässt.

5. Adapterkit für Fahrzeugsitzverankerungen, wobei die Verankerungen vier isofixartige Ringe (3) sind, **dadurch gekennzeichnet, dass** es zwei seitliche Adapter (1) nach einem der vorhergehenden Ansprüche umfasst, die voneinander getrennt sind und durch einen zentralen Adapter (2) miteinander verbunden sind, der eine zweite Stange (2.1) umfasst, die an zwei Befestigungsmitteln (2.2) der zweiten Stange (2) mit den ersten Stangen (1) zusammengefügt ist, sodass jedes zweite Befestigungsmittel (2.2) an einer der ersten Stangen (1.1) der seitlichen Adapter (1) befestigt ist.

6. Adapterkit nach Anspruch 5, wobei die zweiten Befestigungsmittel (2.2) Klammern sind.

7. Adapterkit nach einem der Ansprüche 5 oder 6, wobei die zweite Stange (2.1) einen kreisförmigen Querschnitt aufweist.

8. Adapterkit nach einem der Ansprüche 5 bis 7, wobei die zweite Stange (2.1) und das zweite Befestigungsmittel (2.2) mittels eines Verbindungsstücks aneinander befestigt sind, das feststehend ist oder das eine relative Bewegung zwischen der zweiten Stange (2.1) und dem zweiten Befestigungsmittel (2.2) zulässt.

9. Adapterkit nach einem der Ansprüche 5 bis 8, wobei die zweite Stange (2.1) einen Längenversteller (2.3) umfasst, sodass es das Einstellen der Länge der Stange (2.1) durch zueinander- oder auseinanderbewegen von zwei Segmenten (2.11) der Stange zulässt, die auf einer Seite des Längenverstellers (2.3) angeordnet ist.

## Revendications

1. Adaptateur latéral (1) pour ancrages de siège de véhicule, dans lequel lesdits ancrages sont deux anneaux du type Isofix (3), **caractérisé en ce qu'**il comprend une première barre (1.1) avec une longueur correspondant à au moins la séparation entre deux anneaux consécutifs (3), et des premiers moyens de fixation (1.2) pour fixer la première barre (1.1) aux anneaux (3), des premiers moyens de fixation étant prévus (1.2) pour chaque anneau (3), de sorte à pouvoir placer un siège de véhicule dans une position transversale sur la première barre (1.1).

2. Adaptateur latéral (1) selon la revendication 1, dans lequel lesdits premiers moyens de fixation (1.2) sont des attaches.

3. Adaptateur latéral (1) selon l'une quelconque des revendications précédentes dans lequel la première barre (1.1) a une section transversale circulaire.

4. Adaptateur latéral (1) selon l'une quelconque des revendications précédentes dans lequel la première barre (1.1) et les premiers moyens de fixation (1.2) sont fixés entre eux au moyen d'une liaison permettant un mouvement relatif les uns par rapport aux autres.

5. Kit adaptateur pour ancrages de siège de véhicule, dans lequel lesdits ancrages sont quatre anneaux du type Isofix (3), **caractérisé en ce qu'**il comprend deux adaptateurs latéraux (1) selon l'une quelconque des revendications précédentes, séparés l'un de l'autre et raccordés par un adaptateur central (2) qui comprend une deuxième barre (2.1) reliée à deux deuxièmes moyens de fixation (2.2) de la deuxième barre (2) aux premières barres (1), de sorte que tous les deuxièmes moyens de fixation (2.2) sont fixés à chacune des premières barres (1.1) des adaptateurs latéraux (1).

6. Kit adaptateur selon la revendication 5 dans lequel les deuxièmes moyens de fixation (2.2) sont des attaches.

7. Kit adaptateur selon l'une quelconque des revendications 5 ou 6 dans lequel la deuxième barre (2.1) a une section transversale circulaire.

8. Kit adaptateur selon l'une quelconque des revendications 5 à 7 dans lequel la deuxième barre (2.1) et les deuxièmes moyens de fixation (2.2) sont fixés entre eux au moyen d'une liaison qui est fixée ou permet un mouvement relatif entre la deuxième barre (2.1) et les deuxièmes moyens de fixation (2.2).

9. Kit adaptateur selon l'une quelconque des revendications 5 à 8 dans lequel la deuxième barre (2.1) comprend un ajusteur de longueur (2.3) de sorte à pouvoir ajuster la longueur de la barre (2.1) en déplaçant ensemble ou séparément deux segments (2.11) de ladite barre placée des deux côtés de l'ajusteur de longueur (2.3).
